# EUROPÄISCHE PATENTSCHRIFT

(11) **EP 4 253 765 B1**
(45) Veröffentlichungstag und Bekanntmachung des Hinweises auf die Patenterteilung: **20.08.2025**
(21) Anmeldenummer: 23160529.6
(22) Anmeldetag: 07.03.2023
(51) Int. Cl.: F15B 1/02, F15B 1/24, F15B 20/00, F15B 1/033, F15B 1/027, F15B 19/00, B60D 1/62, B60T 17/00, B62D 5/30, B62D 49/00, B60T 13/12, A01B 69/00, F15B 11/16

(54) **VORRICHTUNG ZUR AUFRECHTERHALTUNG EINER HYDRAULIKVERSORGUNG EINES NUTZFAHRZEUGS**
DEVICE FOR MAINTAINING A HYDRAULIC SUPPLY OF A COMMERCIAL VEHICLE
DISPOSITIF DE MAINTIEN D'UNE ALIMENTATION HYDRAULIQUE D'UN VÉHICULE UTILITAIRE

(30) Priorität: 31.03.2022 DE 102022107684
(43) Veröffentlichungstag der Anmeldung: 04.10.2023
(73) Patentinhaber: Deere & Company, Moline, IL 61265 (US)
(72) Erfinder: Letscher, Jens, Mannheim (DE)
(74) Vertreter: Dehnhardt, Florian Christopher

(56) Entgegenhaltungen:
- DE-A1- 102013 200 444
- DE-A1- 102014 215 567
- DE-A1- 102019 000 837
- DE-A1- 19 917 210
- DE-B3- 102020 200 642
- US-A1- 2013 037 340
- US-A1- 2018 120 185
- US-A1- 2021 285 465

## Beschreibung

Die Erfindung betrifft eine Vorrichtung zur Aufrechterhaltung einer Hydraulikversorgung eines Nutzfahrzeugs, umfassend einen Hydraulikkreis und eine über einen Drucksteuereingang bezüglich ihres Fördervolumens verstellbare Hydraulikpumpe zur Speisung des Hydraulikkreises mit Hydraulikflüssigkeit.

Ein derartiger Hydraulikkreis dient unter anderem in landwirtschaftlichen Nutzfahrzeugen der Energieversorgung diverser hydraulischer Verbraucher, zu denen auch sicherheitsrelevante Einrichtungen wie eine hydraulische Lenk- bzw. Bremsanlage gehören. Die betreffenden Einrichtungen werden hierbei mit unter Druck stehender Hydraulikflüssigkeit aus einem Hydraulikkreis des Nutzfahrzeugs versorgt, wobei die Zuführung der Hydraulikflüssigkeit mittels einer hydraulischen Hochdruckpumpe erfolgt. Genauer gesagt handelt es sich bei der hydraulischen Hochdruckpumpe um eine Verstellpumpe, deren Fördervolumen sich in Abhängigkeit eines an einen Drucksteuereingang übermittelten Steuerdrucks verändern lässt (sog. Load-Sensing-System bzw. LS-System), sodass eine Anpassung an den tatsächlichen Energiebedarf der zu versorgenden hydraulischen Verbraucher möglich ist.

Da sich insbesondere eine hydraulische Lenk- bzw. Bremsanlage im Falle eines Ausfalls der hydraulischen Hochdruckpumpe manuell in der Regel nur schwer oder überhaupt nicht mehr betätigen lässt, verfügen manche Hydrauliksysteme in land- oder forstwirtschaftlichen Nutzfahrzeugen über eine elektrisch betriebene Hilfspumpe, die aus einer Fahrzeugbatterie mit Energie versorgt wird und so eine redundante Versorgung der betreffenden hydraulischen Verbraucher mit Hydraulikflüssigkeit erlaubt. Angesichts der insofern zu erbringenden Fördervolumina bzw. -drücke ist die Verwendung einer elektrisch betriebenen Hilfspumpe jedoch vergleichsweise aufwendig.

DE 10 2014 215567 A1 offenbart eine bekannte Vorrichtung.

Es ist daher Aufgabe der vorliegenden Erfindung, eine mit verhältnismäßig geringem Zusatzaufwand verwirklichbare Vorrichtung der eingangs genannten Art anzugeben.

Diese Aufgabe wird durch eine Vorrichtung zur Aufrechterhaltung einer Hydraulikversorgung eines Nutzfahrzeugs mit den Merkmalen des Patentanspruchs 1 gelöst.

Die Vorrichtung zur Aufrechterhaltung einer Hydraulikversorgung eines Nutzfahrzeugs umfasst einen Hydraulikkreis und eine über einen Drucksteuereingang bezüglich ihres Fördervolumens verstellbare Hydraulikpumpe zur Speisung des Hydraulikkreises mit Hydraulikflüssigkeit und einen seitens des Hydraulikkreises über ein Rückschlagventil aufladbaren Druckspeicher, wobei mittels eines Ladeventils über eine Sensorleitung eine Druckverbindung zwischen dem Hydraulikkreis und dem Drucksteuereingang der Hydraulikpumpe herstellbar ist, und mittels eines Entladeventils durch Überbrückung des Rückschlagventils über ein Druckbegrenzungselement eine Versorgungsverbindung zwischen dem Druckspeicher und dem Hydraulikkreis herstellbar ist, wobei das Druckbegrenzungselement als Druckregelventil zur Bereitstellung eines vorgegebenen Arbeitsdrucks im Hydraulikkreis ausgebildet ist, wobei ein Druckregeleingang des Druckregelventils über eine Sensorleitung unter Überbrückung des Entladeventils mit dem Hydraulikkreis kommuniziert.

Wird das Ladeventil geöffnet, so wird über die Sensorleitung der im Hydraulikkreis aktuell anliegende Arbeitsdruck an den Drucksteuereingang der Hydraulikpumpe übermittelt. Dieser liegt für den Fall, dass sich die Hydraulikpumpe gerade im Standby-Betrieb befindet, in der Größenordnung von 30 bis 50 bar. In der Folge führt dies zu einem Ausschwenken der Hydraulikpumpe sowie einer damit einhergehenden Erhöhung des Fördervolumens in Richtung des Hydraulikkreises und damit des Druckspeichers. Hierbei wird der Druckspeicher über das Rückschlagventil bis zum Erreichen eines von der Hydraulikpumpe erbringbaren maximalen Förderdrucks mit Hydraulikflüssigkeit befüllt. Der so erzielbare maximale Speicherdruck beträgt in etwa 180 bis 190 bar. Anschließend wird das Ladeventil wieder geschlossen, und die Hydraulikpumpe kehrt in den Standby-Betrieb zurück. Das Rückschlagventil stellt hierbei sicher, dass der beim Befüllen aufgebaute maximale Speicherdruck im Druckspeicher erhalten bleibt.

Wird nun das Entladeventil geöffnet, so kann die im Druckspeicher befindliche Hydraulikflüssigkeit unter Umgehung des Rückschlagventils sich in den Hydraulikkreis entladen. Die derart hergestellte Versorgungsverbindung ermöglicht es, auch bei einem Ausfall der Hydraulikpumpe zumindest bestimmte hydraulische Verbraucher des Nutzfahrzeugs in für den Bediener gewohnter Weise für einen begrenzten Zeitraum, der sich aus der im Druckspeicher enthaltenen hydraulischen Energie ergibt, weiter zu betreiben. Für den Fall der hydraulischen Lenk- bzw. Bremsanlage erhält der Bediener so die Gelegenheit, das Nutzfahrzeug sicher in eine geeignete Parkposition zu lenken und dort zum Stillstand zu bringen.

Aufgrund der Nutzung der ohnehin vorhandenen Hydraulikpumpe zum Laden des Druckspeichers lässt sich die erfindungsgemäße Vorrichtung mit vergleichsweise geringem Zusatzaufwand verwirklichen.

Um beim Öffnen des Entladeventils ein unkontrolliertes Entladen des Druckspeichers in den Hydraulikkreis zu verhindern, erfolgt die Herstellung der Versorgungsverbindung über ein zwischen Druckspeicher und Hydraulikkreis angeordnetes Druckbegrenzungselement. Dieses ist innerhalb der Versorgungsverbindung in Serie mit dem Entladeventil geschaltet.

Um die Einhaltung eines vorgegebenen, mithin definierten Arbeitsdrucks im Hydraulikkreis zu gewährleisten, ist das Druckbegrenzungselement als Druckregelventil ausgebildet. Das Druckregelventil wird derart ausgelegt, dass bei geöffnetem Entladeventil sich ein Arbeitsdruck von etwa 65 bar im Hydraulikkreis einstellt. I

Vorteilhafte Ausgestaltungen der erfindungsgemäßen Vorrichtung gehen aus den Unteransprüchen hervor.

Bevorzugt wird das Ladeventil bzw. das Entladeventil abhängig vom Förderdruck der Hydraulikpumpe bzw. vom Speicherdruck im Druckspeicher betätigt.

So deutet ein Abfall des Förderdrucks in der Regel auf eine Funktionsbeeinträchtigung bis hin zum Ausfall der Hydraulikpumpe hin. Dementsprechend kann vorgesehen sein, dass das Entladeventil bei Unterschreiten eines vorgegebenen Mindestförderdrucks der Hydraulikpumpe eine geöffnete Stellung einnimmt. Der einzuhaltende Mindestförderdruck ist hierbei in der Größenordnung von 90 bis 95% des für den Standby-Betrieb der Hydraulikpumpe vorgesehenen Arbeitsdrucks im Hydraulikkreis vorgegeben.

Umgekehrt kann auf die Notwendigkeit der Durchführung eines Ladevorgangs geschlossen werden, wenn erkannt wird, dass der Speicherdruck und damit die im Druckspeicher enthaltene hydraulische Energie nicht ausreicht, um den Betrieb der hydraulischen Verbraucher hinlänglich zu gewährleisten. Folglich ist es denkbar, dass das Ladeventil bei Unterschreiten eines für den Speicherdruck einzuhaltenden Mindestspeicherdrucks im Druckspeicher eine geöffnete Stellung einnimmt. Der einzuhaltende Mindestspeicherdruck ist hierbei im Bereich von 80 bis 90% des maximalen Speicherdrucks im Druckspeicher vorgegeben.

Hierbei besteht die Möglichkeit, dass eine aufgrund einer Druckerfassung elektrisch und/oder mechanisch gesteuerte Betätigungseinrichtung zum Öffnen des Entladeventils und/oder des Ladeventils vorhanden ist. Im Falle einer elektrisch gesteuerten Betätigungseinrichtung kann ein herkömmlicher Drucksensor Verwendung finden, dessen Signale einer Kontrolleinheit zur Auswertung und elektrischen Ansteuerung eines zur Ventilbetätigung vorgesehenen Solenoids herangezogen werden. Bei Nutzung einer mechanisch gesteuerten Betätigungseinrichtung erfolgt die Ventilbetätigung hingegen durch unmittelbare Druckeinwirkung auf ein zugehöriges Stellelement.

Bei dem Druckspeicher kann es sich um einen mittels eines gasförmigen Betriebsmediums vorspannbaren Kolbenspeicher handeln. Derartige Kolbenspeicher zeichnen sich durch eine besonders kompakte Bauform aus und bestehen üblicherweise aus einem als Hochdruckbehälter ausgebildeten Zylinderrohr, das an seinen Stirnseiten mit einem jeweiligen Deckel verschlossen ist. Ein in dem Zylinderrohr verschiebbarer Kolben unterteilt das Zylinderrohr in einen Gasraum und einen Flüssigkeitsraum. Zum Vorspannen des Kolbenspeichers wird dem Gasraum über einen ersten Anschluss das unter Druck stehende gasförmige Betriebsmedium, in der Regel Stickstoffgas, bis zum Erreichen eines vorgegebenen Vorfülldrucks zugeführt. Dies erfolgt werksseitig oder während eines Werkstattaufenthalts. Wird nun Hydraulikflüssigkeit aus dem Hydraulikkreis über einen zweiten Anschluss in den Flüssigkeitsraum gepresst, so verschiebt sich der Kolben in Richtung des Gasraums unter entsprechender reversibler Kompression des darin befindlichen gasförmigen Betriebsmediums. Die dabei geleistete Arbeit ist bestimmend für die im Kolbenspeicher gespeicherte bzw. speicherbare hydraulische Energie.

An dieser Stelle sei erwähnt, dass grundsätzlich auch eine Verwendung andersartiger Speichertypen, wie beispielsweise eines Blasenspeichers oder dergleichen, denkbar ist. Aufgrund der gemessen an seiner kompakten Bauweise vergleichsweise hohen Ladekapazität wird jedoch ein Kolbenspeicher bevorzugt.

Erfahrungsgemäß entweicht aufgrund von Leckagen das im Gasraum des Kolbenspeichers unter Druck stehende gasförmige Betriebsmedium im Laufe der Zeit. Dies führt zu einer schleichenden Abnahme des Vorfülldrucks und damit zu einer entsprechenden Degradation der gespeicherten bzw. speicherbaren hydraulischen Energie. Es kann daher vorgesehen sein, dass eine Kontrolleinheit nach Maßgabe eines in einem vorgegebenen Speicherzustand sensorisch erfassten Vorfülldrucks auf eine aktuelle Energiespeicherfähigkeit des Druckspeichers schließt. Ergibt sich, dass ein für den vorgegebenen Speicherzustand spezifizierter Nennvorfülldruck unterschritten ist, erfolgt die Ausgabe einer von der Kontrolleinheit über eine Nutzerschnittstelle veranlassten Fahrerinformation. Diese kann insbesondere in Form einer Textanweisung auf einem Display der Nutzerschnittstelle angezeigt werden und auf die Notwendigkeit hinweisen, eine entsprechende Druckkorrektur durch Nachfüllen des gasförmigen Betriebsmediums vorzunehmen.

Der einzuhaltende Nennvorfülldruck kann sich hierbei auf einen vollständig oder teilweise entleerten Speicherzustand des Kolbenspeichers beziehen. Ist eine vollständige Entleerung typischerweise einem wartungsbedingten Werkstattaufenthalt vorbehalten, kann eine Teilentleerung grundsätzlich auch in den normalen Betrieb des Nutzfahrzeugs eingebunden werden. So ist es in diesem Zusammenhang vorstellbar, den Kolbenspeicher durch Öffnen des Entladeventils auf einen definierten Speicherdruck zu entladen sowie den sich daraus ergebenden Vorfülldruck mit einem für den betreffenden Speicherdruck spezifizierten Nennvorfülldruck zu vergleichen.

Andererseits kann die Kontrolleinheit auch in Abhängigkeit sensorisch erfasster Lade- und/oder Entladekennlinien, die den Verlauf der Kolbenstellung als Funktion des Vorfülldrucks, des Speicherdrucks sowie einer Betriebstemperatur wiedergeben, auf eine aktuelle Energiespeicherfähigkeit des Kolbenspeichers schließen. Die aktuelle Energiespeicherfähigkeit ergibt sich dann durch Vergleich der erfassten Kennlinien mit entsprechenden Nennkennlinien, die sich ihrerseits aus den Spezifikationen des verwendeten Kolbenspeichers ergeben.

Weiterhin kann auch vorgesehen sein, dass die Kontrolleinheit durch Vergleich eines sensorisch erfassten Vorfülldrucks mit einer sensorisch erfassten, mit dem jeweiligen Vorfülldruck korrespondierenden Kolbenstellung auf eine aktuelle Energiespeicherfähigkeit des Kolbenspeichers schließt. Die aktuelle Energiespeicherfähigkeit ergibt sich hierbei aus einer beobachteten Fehlstellung des Kolbens gegenüber einer für den betreffenden Vorfülldruck spezifizierten Nennkolbenstellung.

Um das Nutzfahrzeug bei ausgefallener Hydraulikpumpe auch für den Fall eines unzulänglich geladenen Druckspeichers bis zur nächsten Werkstatt bewegen zu können, kann zur Verwirklichung eines Abschleppmodus vorgesehen sein, dass dem Hydraulikkreis über ein weiteres Rückschlagventil Hydraulikflüssigkeit insbesondere aus einer über eine lösbare Hydraulikkupplung anschließbaren Zusatzhydraulikversorgung zuführbar ist. Gleichzeitig stellt ein Umschaltventil abhängig von einer erkannten Hydraulikflüssigkeitszuführung eine Verbindung zwischen einem Rücklauf des Hydraulikkreises und einem Reservoir der Zusatzhydraulikversorgung her, vorzugsweise derart, dass die im Hydraulikkreis des Nutzfahrzeugs enthaltene Hydraulikflüssigkeitsmenge im Wesentlichen gleich bleibt. Unter anderem ermöglicht dies eine externe Versorgung der an dem Hydraulikkreis angeschlossenen hydraulischen Verbraucher seitens einer in einem Abschleppfahrzeug vorhandenen Hydraulikdruckquelle.

Anstelle der Verwendung einer in einem Abschleppfahrzeugs vorhandenen Hydraulikdruckquelle ist es auch denkbar, den Druckspeicher mittels einer einfachen hydraulischen Handpumpe soweit aufzuladen, dass sich das Nutzfahrzeug auf einen Tieflader zum Weitertransport verbringen lässt. Die hydraulische Handpumpe kann hierbei mit Hydraulikflüssigkeit aus einem Reservoir des Nutzfahrzeugs gespeist werden.

Die erfindungsgemäße Vorrichtung zur Aufrechterhaltung einer Hydraulikversorgung eines Nutzfahrzeugs wird im Folgenden anhand der beigefügten Zeichnungen näher beschrieben. Dabei beziehen sich identische Bezugszeichen auf übereinstimmende oder bezüglich ihrer Funktion vergleichbare Komponenten. Es zeigen:
- Fig. 1: eine beispielhafte Ausführung der erfindungsgemäßen Vorrichtung zur Aufrechterhaltung einer Hydraulikversorgung eines Nutzfahrzeugs,
- Fig. 2: eine erste konstruktive Abwandlung der in Fig. 1 wiedergegebenen erfindungsgemäßen Vorrichtung,
- Fig. 3: eine zweite konstruktive Abwandlung der in Fig. 1 wiedergegebenen erfindungsgemäßen Vorrichtung, und
- Fig. 4: ein optionaler Zusatzschaltkreis zur Verwirklichung eines Abschleppmodus durch Anschluss einer Zusatzhydraulikversorgung.

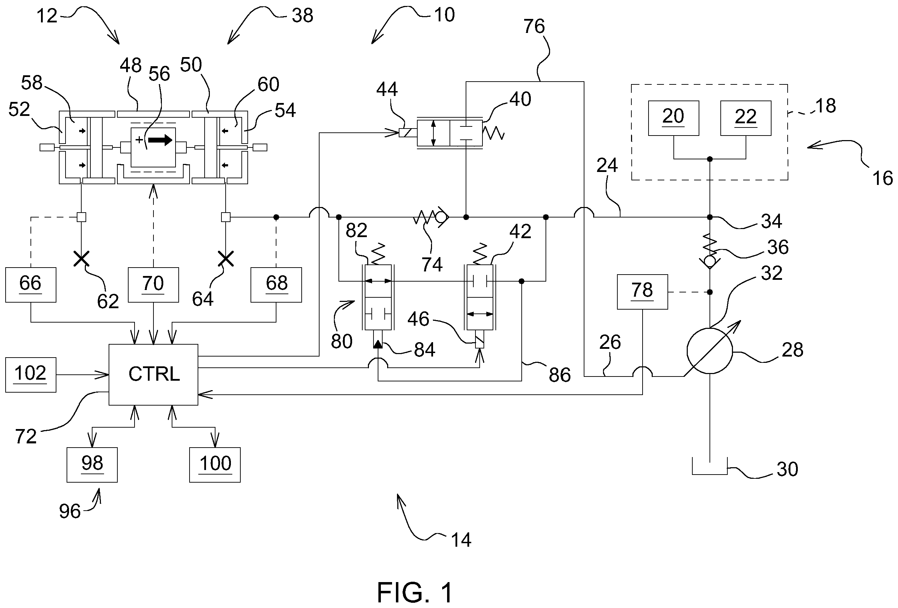

Fig. 1 zeigt ein schematisch dargestelltes Ausführungsbeispiel der erfindungsgemäßen Vorrichtung 10 zur Aufrechterhaltung einer Hydraulikversorgung eines Nutzfahrzeugs 12, vorliegend eines nicht näher wiedergegebenen landwirtschaftlichen Traktors 14.

Ein von dem landwirtschaftlichen Traktor 14 umfasstes Hydrauliksystem 16 dient der Versorgung diverser hydraulischer Verbraucher 18, unter anderem einer hydraulischen Lenk- bzw. Bremsanlage 20, 22. Genauer gesagt umfasst das Hydrauliksystem 16 einen zum Betrieb der hydraulischen Verbraucher 18 vorgesehenen Hydraulikkreis 24, der mittels einer über einen Drucksteuereingang 26 bezüglich ihres Fördervolumens verstellbaren Hydraulikpumpe 28 mit Hydraulikflüssigkeit aus einem Reservoir 30 gespeist wird. Ein zwischen einem Förderausgang 32 der Hydraulikpumpe 28 und einer Einspeisestelle 34 des Hydraulikkreises 24 angeordnetes erstes Rückschlagventil 36 beugt einem unerwünschten Druckverlust im Hydraulikkreis 24 bei einem Ausfall der Hydraulikpumpe 28 vor. Die Hydraulikpumpe 28 wird hierbei seitens eines im landwirtschaftlichen Traktor 14 vorhandenen Verbrennungsmotors (nicht gezeigt) angetrieben.

Es sei angemerkt, dass neben den in Fig. 1 dargestellten Komponenten auch weitere Hydraulikelemente vorhanden sein können. Die vorliegende Beschreibung soll sich jedoch aus Gründen der Verständlichkeit ausschließlich auf für die Funktion der Vorrichtung 10 erforderlichen Bestandteile beschränken.

Wie in Fig. 1 erkennbar ist, umfasst die Vorrichtung 10 des Weiteren einen Druckspeicher 38, ein Ladeventil 40 sowie ein Entladeventil 42. Beispielsgemäß sind die beiden Ventile als über zugehörige Solenoide 44, 46 elektrisch betätigbare 2/2-Wegeventile ausgebildet, wobei diese in stromlosem Zustand geschlossen sind.

Bei dem Druckspeicher 38 handelt es sich um einen mittels eines gasförmigen Betriebsmediums vorspannbaren Kolbenspeicher 48. Der Kolbenspeicher 48 besteht aus einem als Hochdruckbehälter ausgebildeten Zylinderrohr 50, das an seinen Stirnseiten mit einem jeweiligen Deckel 52, 54 verschlossen ist. Ein in dem Zylinderrohr 50 verschiebbarer Kolben 56 unterteilt das Zylinderrohr 50 in einen Gasraum 58 und einen Flüssigkeitsraum 60. Zum Vorspannen des Kolbenspeichers 48 wird dem Gasraum 58 über einen ersten Anschluss 62 werksseitig bzw. während eines Werkstattaufenthalts das unter Druck stehende gasförmige Betriebsmedium, vorliegend Stickstoffgas, bis zum Erreichen eines vorgegebenen Vorfülldrucks zugeführt. Wird nun Hydraulikflüssigkeit aus dem Hydraulikkreis 24 über einen zweiten Anschluss 64 in den Flüssigkeitsraum 60 gepresst, so verschiebt sich der Kolben 56 in Richtung des Gasraums 58 unter entsprechender reversibler Kompression des darin befindlichen Stickstoffgases. Die dabei geleistete Arbeit ist bestimmend für die im Kolbenspeicher 48 gespeicherte bzw. speicherbare hydraulische Energie.

Des Weiteren ist dem Kolbenspeicher 48 ein erster Drucksensor 66 zur Erfassung des aktuellen Vorfülldrucks im Gasraum 58 sowie ein zweiter Drucksensor 68 zur Erfassung des aktuellen Speicherdrucks im Flüssigkeitsraum 60 vorhanden. Ein induktiver Positionssensor 70 dient der berührungslosen Ermittlung der aktuellen Kolbenstellung innerhalb des Zylinderrohrs 50. Die solchermaßen erzeugten Sensorsignale werden einer Kontrolleinheit 72 zur Auswertung zugeführt.

Es sei angemerkt, dass das Speichervolumen des Druckspeichers 38 abweichend von der Darstellung in Fig. 1 auch auf zwei parallel geschaltete Kolbenspeicher 48 aufgeteilt sein kann. Dies erlaubt nicht nur eine Verwendung vergleichsweise kleiner und damit kostengünstiger Kolbenspeicher 48, sondern meist auch eine bessere Ausnutzung des im landwirtschaftlichen Traktor 14 zur Verfügung stehenden Bauraums.

### Laden des Druckspeichers

Der Kolbenspeicher 48 wird seitens des Hydraulikkreises 24 über ein zweites Rückschlagventil 74 aufgeladen, indem mittels des Ladeventils 40 über eine Sensorleitung 76 eine Druckverbindung zwischen dem Hydraulikkreis 24 und dem Drucksteuereingang 26 der Hydraulikpumpe 28 hergestellt wird.

Die Betätigung des Ladeventils 40 erfolgt auf Veranlassung der Kontrolleinheit 72 abhängig von dem mittels des zweiten Drucksensors 68 erfassten aktuellen Speicherdrucks im Flüssigkeitsraum 60 des Kolbenspeichers 48. So schließt die Kontrolleinheit 72 auf die Notwendigkeit der Durchführung eines Ladevorgangs, wenn diese erkennt, dass der mittels des zweiten Drucksensors 68 erfasste Speicherdruck und damit die im Kolbenspeicher 48 enthaltene hydraulische Energie nicht ausreicht, um den Betrieb der hydraulischen Verbraucher 18 hinlänglich zu gewährleisten. Dies ist dann der Fall, wenn für den Speicherdruck ein einzuhaltender Mindestspeicherdruck unterschritten ist. Der einzuhaltende Mindestspeicherdruck ist hierbei im Bereich von 80 bis 90% des maximalen Speicherdrucks im Kolbenspeicher 48 vorgegeben.

Trifft dies zu, so wird das Ladeventil 40 von der Kontrolleinheit 72 bei geschlossenem Entladeventil 42 durch Bestromung des zugehörigen Solenoids 44 geöffnet, was dazu führt, dass über die Sensorleitung 76 der im Hydraulikkreis 24 aktuell anliegende Arbeitsdruck an den Drucksteuereingang 26 der Hydraulikpumpe 28 übermittelt wird. Dieser liegt für den Fall, dass sich die Hydraulikpumpe 28 gerade im Standby-Betrieb befindet, in der Größenordnung von 30 bis 50 bar. In der Folge führt dies zu einem Ausschwenken der Hydraulikpumpe 28 sowie einer damit einhergehenden Erhöhung des Fördervolumens in Richtung des Hydraulikkreises 24 und damit des Kolbenspeichers 48. Hierbei wird der Kolbenspeicher 48 über das zweite Rückschlagventil 74 bis zum Erreichen eines von der Hydraulikpumpe 28 erbringbaren maximalen Förderdrucks mit Hydraulikflüssigkeit befüllt. Der so erzielbare maximale Speicherdruck beträgt in etwa 180 bis 190 bar. Anschließend wird das Ladeventil 40 von der Kontrolleinheit 72 wieder geschlossen, und die Hydraulikpumpe 28 kehrt in den Standby-Betrieb zurück. Das zweite Rückschlagventil 74 stellt hierbei sicher, dass der beim Befüllen aufgebaute maximale Speicherdruck im Kolbenspeicher 48 erhalten bleibt.

### Entladen des Druckspeichers

Soll andererseits die im Kolbenspeicher 48 enthaltende hydraulische Energie zum Betrieb der hydraulischen Verbraucher 18 abgerufen werden, wird mittels des Entladeventils 42 das zweite Rückschlagventil 74 überbrückt und so eine Versorgungsverbindung zwischen dem Flüssigkeitsraum 60 des Kolbenspeichers 48 und dem Hydraulikkreis 24 hergestellt.

So deutet ein Abfall des Förderdrucks in der Regel auf eine Funktionsbeeinträchtigung, wenn nicht gar einen Ausfall der Hydraulikpumpe 28 hin. Dementsprechend ist vorgesehen, dass die Betätigung des Entladeventils 42 auf Veranlassung der Kontrolleinheit 72 abhängig von dem mittels eines dritten Drucksensors 78 erfassten aktuellen Förderdrucks der Hydraulikpumpe 28 erfolgt. Mit anderen Worten wird das Entladeventil 42 von der Kontrolleinheit 72 durch Bestromung des zugehörigen Solenoids 46 geöffnet, wenn diese erkennt, dass ein einzuhaltender Mindestförderdruck der Hydraulikpumpe 28 unterschritten ist. Der einzuhaltende Mindestförderdruck ist hierbei in der Größenordnung von 90 bis 95% des für den Standby-Betrieb der Hydraulikpumpe 28 vorgesehenen Arbeitsdrucks vorgegeben.

Wird das Entladeventil 42 von der Kontrolleinheit 72 bei geschlossenen Ladeventil 40 geöffnet, so kann die im Kolbenspeicher 48 befindliche Hydraulikflüssigkeit unter Umgehung des zweiten Rückschlagventils 74 sich in den Hydraulikkreis 24 entladen. Die derart hergestellte Versorgungsverbindung ermöglicht es, auch bei einem Ausfall der Hydraulikpumpe 28 zumindest bestimmte hydraulische Verbraucher 18 des landwirtschaftlichen Traktors 14 in für den Bediener gewohnter Weise für einen begrenzten Zeitraum, der sich aus der im Kolbenspeicher 48 enthaltenen hydraulischen Energie ergibt, weiter zu betreiben. Für den Fall der hydraulischen Lenk- bzw. Bremsanlage 20, 22 erhält der Bediener so die Gelegenheit, den landwirtschaftlichen Traktor 14 sicher in eine geeignete Parkposition zu lenken und dort zum Stillstand zu bringen.

Um beim Öffnen des Entladeventils 42 ein unkontrolliertes Entladen des Kolbenspeichers 48 in den Hydraulikkreis 24 zu verhindern, erfolgt die Herstellung der Versorgungsverbindung über ein zwischen Kolbenspeicher 48 und Hydraulikkreis 24 angeordnetes Druckbegrenzungselement 80. Dieses ist innerhalb der Versorgungsverbindung in Serie mit dem Entladeventil 42 geschaltet. Vorliegend ist die Einhaltung eines vorgegebenen, mithin definierten Arbeitsdrucks im Hydraulikkreis 24 erwünscht, sodass das Druckbegrenzungselement 80 als Druckregelventil 82 ausgebildet ist. Das Druckregelventil 82 ist derart ausgelegt, dass bei geöffnetem Entladeventil 42 sich ein Arbeitsdruck von etwa 65 bar im Hydraulikkreis 24 einstellt. Hierzu kommuniziert ein Druckregeleingang 84 über eine eigene Sensorleitung 86 unter Überbrückung des Entladeventils 42 mit dem Hydraulikkreis 24.

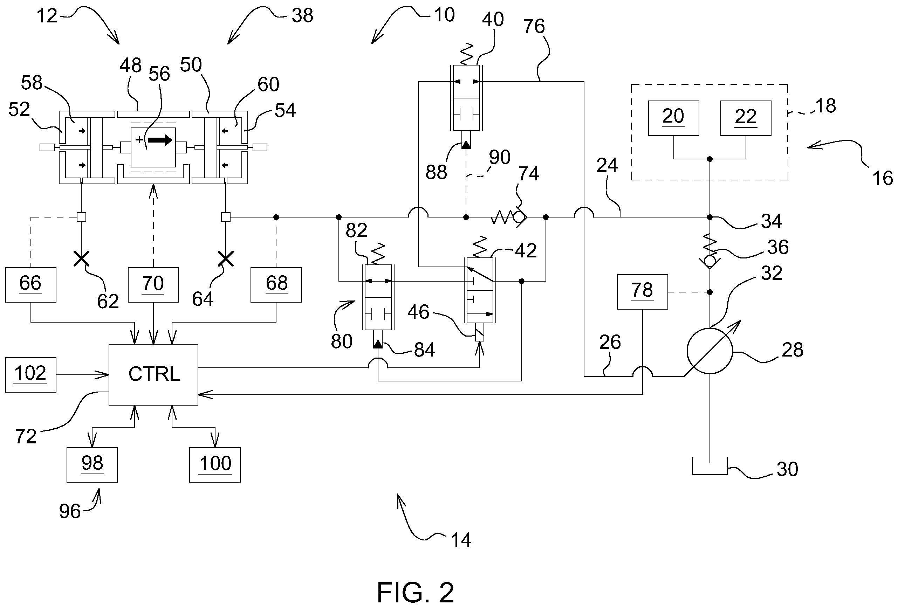

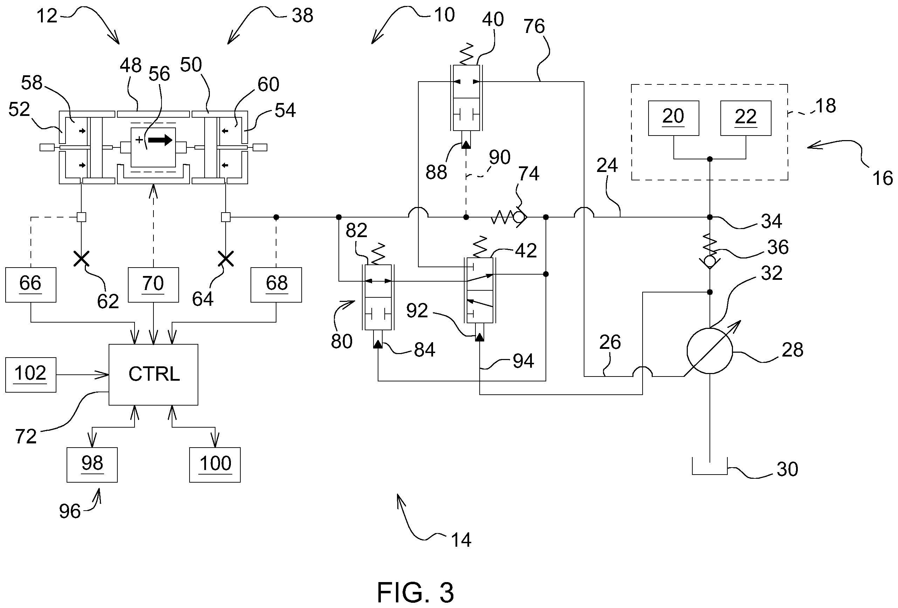

Fig. 2 und 3 zeigen optionale Abwandlungen der vorstehend beschriebenen Vorrichtung 10. Die Funktion ist gegenüber der in Fig. 1 dargestellten Ausführung unverändert, die beiden Abwandlungen unterscheiden sich jedoch hinsichtlich der Art der Betätigung von Lade- und Entladeventil 40, 42.

So erfolgt im Falle des in Fig. 2 dargestellten Ladeventils 40 die Ventilbetätigung nicht elektrisch durch Verwendung eines Solenoids 44, sondern mechanisch durch unmittelbare Druckeinwirkung auf ein zugehöriges Stellelement 88, das über eine Steuerleitung 90 mit dem im Flüssigkeitsraum 60 des Kolbenspeichers 48 herrschenden Speicherdruck beaufschlagt wird. Wie ferner zu erkennen ist, ist die Sensorleitung 76 des Ladeventils 40 nicht unmittelbar, sondern über das nunmehr als 3/2-Wegeventil ausgebildete Entladeventil 42 mit dem Hydraulickreis 24 verbindbar.

Die Abwandlung in Fig. 3 sieht zusätzlich eine mechanische Ventilbetätigung des Entladeventils 42 anstelle der Verwendung des Solenoids 46 vor, wobei dies durch unmittelbare Druckeinwirkung auf ein zugehöriges weiteres Stellelement 92 erfolgt, das über eine weitere Steuerleitung 94 mit dem Förderausgang 32 der Hydraulikpumpe 28 in Verbindung steht. Der zur Erfassung des Förderdrucks vorgesehene dritte Drucksensor 78 entfällt in diesem Fall.

### Speicherdiagnose

Erfahrungsgemäß entweicht aufgrund von Leckagen das im Gasraum 58 des Kolbenspeichers 48 unter Druck stehende Stickstoffgas im Laufe der Zeit. Dies führt zu einer schleichenden Abnahme des Vorfülldrucks im Gasraum 58 und damit zu einer entsprechenden Degradation der gespeicherten bzw. speicherbaren hydraulischen Energie. Die diesbezügliche Beurteilung des Zustands des Kolbenspeichers 48 erfolgt im Rahmen einer von der Kontrolleinheit 72 durchgeführten Speicherdiagnose. Insofern kann zwischen verschiedenen Vorgehensweisen gewählt werden.

Im einfachsten Fall ist vorgesehen, dass die Kontrolleinheit 72 nach Maßgabe eines in einem vorgegebenen Speicherzustand sensorisch erfassten Vorfülldrucks auf eine aktuelle Energiespeicherfähigkeit des Kolbenspeichers 48 schließt. Ergibt sich, dass ein für den vorgegebenen Speicherzustand spezifizierter Nennvorfülldruck unterschritten ist, erfolgt die Ausgabe einer von der Kontrolleinheit 72 über eine Nutzerschnittstelle 96 veranlassten Fahrerinformation. Diese wird in Form einer Textanweisung auf einem Display 98 der Nutzerschnittstelle 96 angezeigt und weist auf die Notwendigkeit hin, eine entsprechende Druckkorrektur durch Nachfüllen des gasförmigen Betriebsmediums vorzunehmen.

Der einzuhaltende Nennvorfülldruck bezieht sich hierbei auf einen vollständig oder teilweise entleerten Speicherzustand des Kolbenspeichers 48. Ist eine vollständige Entleerung typischerweise einem wartungsbedingten Werkstattaufenthalt vorbehalten, kann eine Teilentleerung grundsätzlich auch in den normalen Betrieb des landwirtschaftlichen Traktors 14 eingebunden werden. So ist es in diesem Zusammenhang vorstellbar, den Kolbenspeicher 48 durch Öffnen des Entladeventils 42 auf einen vordefinierten Speicherdruck zu entladen sowie den sich daraus ergebenden Vorfülldruck mit einem für den betreffenden Speicherdruck spezifizierten Nennvorfülldruck zu vergleichen.

Andererseits lässt sich eine zur Speicherdiagnose erforderliche (Teil-) Entleerung des Kolbenspeichers 48 umgehen, wenn die Kontrolleinheit 72 in Abhängigkeit sensorisch erfasster Lade- und/oder Entladekennlinien, die den Verlauf der Kolbenstellung als Funktion des Vorfülldrucks, des Speicherdrucks sowie einer Betriebstemperatur wiedergeben, auf eine aktuelle Energiespeicherfähigkeit des Kolbenspeichers 48 schließt. Die aktuelle Energiespeicherfähigkeit ergibt sich dann durch Vergleich der erfassten Kennlinien mit entsprechenden Nennkennlinien, die sich ihrerseits aus den Spezifikationen des verwendeten Kolbenspeichers 48 ergeben. Letztere sind in einer mit der Kontrolleinheit 72 kommunizierenden Speichereinheit 100 hinterlegt. Zur sensorischen Erfassung der Kolbenstellung dient der induktive Positionssensor 70, von Vorfülldruck bzw. Speicherdruck der erste bzw. zweite Drucksensor 66, 68. Die Betriebstemperatur ergibt sich ferner durch sensorische Erfassung einer Umgebungstemperatur mittels eines mit der Kontrolleinheit 72 verbundenen Temperatursensors 102.

Weiterhin kann auch vorgesehen sein, dass die Kontrolleinheit 72 durch Vergleich eines sensorisch erfassten Vorfülldrucks mit einer sensorisch erfassten, mit dem jeweiligen Vorfülldruck korrespondierenden Kolbenstellung auf eine aktuelle Energiespeicherfähigkeit des Kolbenspeichers 48 schließt. Die aktuelle Energiespeicherfähigkeit ergibt sich hierbei aus einer beobachteten Fehlstellung des Kolbens 56 gegenüber einer für den betreffenden Vorfülldruck spezifizierten Nennkolbenstellung. Die sensorische Erfassung der Kolbenstellung bzw. des Vorfülldrucks erfolgt mittels des induktiven Positionssensors 70 bzw. des ersten Drucksensors 66.

### Abschleppmodus

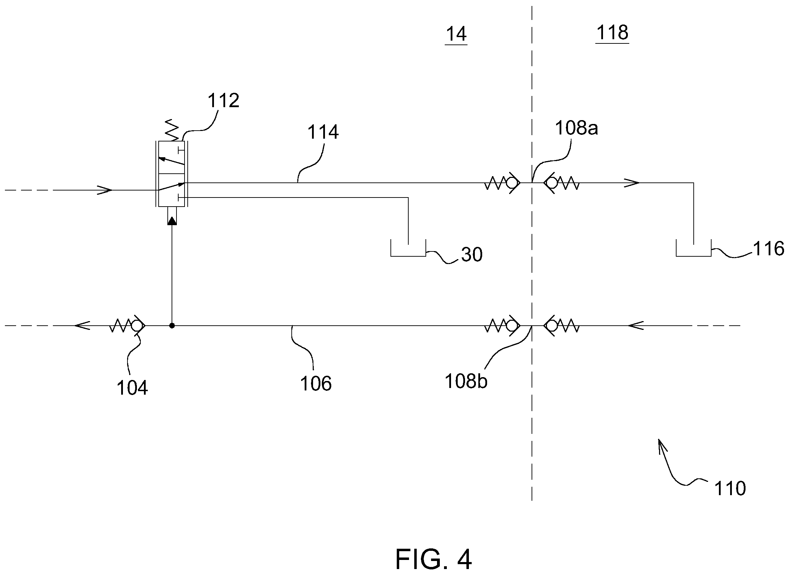

Um den landwirtschaftlichen Traktor 14 bei ausgefallener Hydraulikpumpe 28 auch für den Fall eines unzulänglich geladenen Kolbenspeichers 48 bis zur nächsten Werkstatt bewegen zu können, ist zur Verwirklichung eines Abschleppmodus vorgesehen, dass dem Hydraulikkreis 24 über ein drittes Rückschlagventil 104 Hydraulikflüssigkeit über einen Zulauf 106 aus einer über eine lösbare Hydraulikkupplung 108a, 108b anschließbaren Zusatzhydraulikversorgung 110 zuführbar ist. Genauer gesagt erfolgt die Zuführung der Hydraulikflüssigkeit über die Einspeisestelle 34 des Hydraulikkreises 24. Gleichzeitig stellt ein Umschaltventil 112 abhängig von einer erkannten Hydraulikflüssigkeitszuführung eine Verbindung zwischen einem Rücklauf 114 des Hydraulikkreises 24 und einem Reservoir 116 der Zusatzhydraulikversorgung 110 her, und zwar derart, dass die im Hydraulikkreis 24 des landwirtschaftlichen Traktors 14 enthaltene Hydraulikflüssigkeitsmenge im Wesentlichen gleich bleibt. Dieser betätigte Zustand des Umschaltventils 112 ist in Fig. 4 wiedergegeben. Dies ermöglicht seitens einer in einem Abschleppfahrzeug 116 vorhandenen Hydraulikdruckquelle, die an dem Hydraulikkreis 24 angeschlossene hydraulische Lenk- und Bremsanlage 20, 22 extern mit Energie zu versorgen. Bei dem Abschleppfahrzeug 116 handelt es sich beispielsweise um einen weiteren nicht näher wiedergegebenen landwirtschaftlichen Traktor.

## Patentansprüche

1. Vorrichtung zur Aufrechterhaltung einer Hydraulikversorgung eines Nutzfahrzeugs, umfassend einen Hydraulikkreis (24) und eine über einen Drucksteuereingang (26) bezüglich ihres Fördervolumens verstellbare Hydraulikpumpe (28) zur Speisung des Hydraulikkreises (24) mit Hydraulikflüssigkeit, mit einem seitens des Hydraulikkreises (24) über ein Rückschlagventil (74) aufladbaren Druckspeicher (38), wobei mittels eines Ladeventils (40) über eine Sensorleitung (76) eine Druckverbindung zwischen dem Hydraulikkreis (24) und dem Drucksteuereingang (26) der Hydraulikpumpe (28) herstellbar ist, und mittels eines Entladeventils (42) durch Überbrückung des Rückschlagventils (74) über ein Druckbegrenzungselement (80) eine Versorgungsverbindung zwischen dem Druckspeicher (38) und dem Hydraulikkreis (24) herstellbar ist, **dadurch gekennzeichnet, dass** das Druckbegrenzungselement (80) als Druckregelventil (82) zur Bereitstellung eines vorgegebenen Arbeitsdrucks im Hydraulikkreis (24) ausgebildet ist, wobei ein Druckregeleingang (84) des Druckregelventils (82) über eine Sensorleitung (86) unter Überbrückung des Entladeventils (42) mit dem Hydraulikkreis (24) kommuniziert.

2. Vorrichtung nach Anspruch 1, **dadurch gekennzeichnet, dass** das Entladeventil (42) bei Unterschreiten eines vorgegebenen Mindestförderdrucks der Hydraulikpumpe (28) eine geöffnete Stellung einnimmt.

3. Vorrichtung nach Anspruch 1 oder 2, **dadurch gekennzeichnet, dass** das Ladeventil (40) bei Unterschreiten eines für den Speicherdruck einzuhaltenden Mindestspeicherdrucks im Druckspeicher (38) eine geöffnete Stellung einnimmt.

4. Vorrichtung nach wenigstens einem der Ansprüche 2 oder 3, **dadurch gekennzeichnet, dass** eine aufgrund einer Druckerfassung elektrisch und/oder mechanisch gesteuerte Betätigungseinrichtung (44, 46, 88, 92) zum Öffnen des Entladeventils (42) und/oder des Ladeventils (40) vorhanden ist.

5. Vorrichtung nach einem der vorhergehenden Ansprüche, **dadurch gekennzeichnet, dass** es sich bei dem Druckspeicher (38) um einen mittels eines gasförmigen Betriebsmediums vorspannbaren Kolbenspeicher (48) handelt.

6. Vorrichtung nach Anspruch 5, **dadurch gekennzeichnet, dass** eine Kontrolleinheit (72) nach Maßgabe eines in einem vorgegebenen Speicherzustand sensorisch erfassten Vorfülldrucks auf eine aktuelle Energiespeicherfähigkeit des Kolbenspeichers (48) schließt.

7. Vorrichtung nach Anspruch 5, **dadurch gekennzeichnet, dass** eine Kontrolleinheit (72) in Abhängigkeit sensorisch erfasster Lade- und/oder Entladekennlinien, die den Verlauf der Kolbenstellung als Funktion des Vorfülldrucks, des Speicherdrucks sowie einer Betriebstemperatur wiedergeben, auf eine aktuelle Energiespeicherfähigkeit des Kolbenspeichers (48) schließt.

8. Vorrichtung nach Anspruch 5, **dadurch gekennzeichnet, dass** eine Kontrolleinheit (72) durch Vergleich eines sensorisch erfassten Vorfülldrucks mit einer sensorisch erfassten, mit dem jeweiligen Vorfülldruck korrespondierenden Kolbenstellung auf eine aktuelle Energiespeicherfähigkeit des Kolbenspeichers (48) schließt.

9. Vorrichtung nach wenigstens einem der vorhergehenden Ansprüche, **dadurch gekennzeichnet, dass** dem Hydraulikkreis (24) über ein weiteres Rückschlagventil (104) Hydraulikflüssigkeit insbesondere aus einer über eine lösbare Hydraulikkupplung (108a, 108b) anschließbaren Zusatzhydraulikversorgung (110) zuführbar ist, wobei ein Umschaltventil (112) abhängig von einer erkannten Hydraulikflüssigkeitszuführung gleichzeitig eine Verbindung zwischen einem Rücklauf (114) des Hydraulikkreises (24) und einem Reservoir der Zusatzhydraulikversorgung (110) herstellen kann, vorzugsweise derart, dass die im Hydraulickreis (24) des Nutzfahrzeugs (12) enthaltene Hydraulikflüssigkeitsmenge im Wesentlichen gleich bleibt.

## Claims

1. Device for maintaining a hydraulic supply of a utility vehicle, comprising a hydraulic circuit (24) and a hydraulic pump (28), which is adjustable in terms of its delivery volume via a pressure control inlet (26), for feeding hydraulic fluid to the hydraulic circuit (24), having a pressure accumulator (38) that can be charged from the hydraulic circuit (24) via a check valve (74), a pressure connection between the hydraulic circuit (24) and the pressure control inlet (26) of the hydraulic pump (28) being producible via a sensor line (76) by means of a charging valve (40), and a supply connection between the pressure accumulator (38) and the hydraulic circuit (24) being producible via a pressure-limiting element (80) by means of a discharging valve (42), by virtue of the check valve (74) being bypassed, **characterized in that** the pressure-limiting element (80) is configured as a pressure control valve (82) for providing a predefined working pressure in the hydraulic circuit (24), wherein a pressure control inlet (84) of the pressure control valve (82) communicates via a sensor line (86) with the hydraulic circuit (24), bypassing the discharging valve (42).

2. Device according to Claim 1, **characterized in that** the discharging valve (42) assumes an opened position if a predefined minimum delivery pressure of the hydraulic pump (28) is undershot.

3. Device according to Claim 1 or 2, **characterized in that** the charging valve (40) assumes an opened position if a minimum accumulator pressure that is to be maintained for the accumulator pressure is undershot in the pressure accumulator (38).

4. Device according to at least one of Claims 2 and 3, **characterized in that** an actuating device (44, 46, 88, 92) that is electrically and/or mechanically controlled on the basis of a detection of pressure is provided for opening the discharging valve (42) and/or the charging valve (40).

5. Device according to any one of the preceding claims, **characterized in that** the pressure accumulator (38) is a piston-type accumulator (48) that can be preloaded by means of a gaseous operating medium.

6. Device according to Claim 5, **characterized in that** a control unit (72) infers a present energy storage capacity of the piston-type accumulator (48) in accordance with a pre-fill pressure detected by sensor means in a predefined accumulator state.

7. Device according to Claim 5, **characterized in that** a control unit (72) infers a present energy storage capacity of the piston-type accumulator (48) in a manner dependent on charging and/or discharging characteristic curves which are detected by sensor means and which represent the course of the piston position as a function of the pre-fill pressure, the accumulator pressure and an operating temperature.

8. Device according to Claim 5, **characterized in that** a control unit (72) infers a present energy storage capacity of the piston-type accumulator (48) by comparing a pre-fill pressure detected by sensor means with a piston position which is detected by sensor means and which corresponds to the respective pre-fill pressure.

9. Device according to at least one of the preceding claims, **characterized in that** hydraulic fluid can be fed to the hydraulic circuit (24) via a further check valve (104), in particular from an additional hydraulic supply (110) that is connectable by means of a releasable hydraulic coupling (108a, 108b), a switching valve (112) simultaneously being able to produce a connection between a return line (114) of the hydraulic circuit (24) and a reservoir of the additional hydraulic supply (110) in a manner dependent on an identified feed of hydraulic fluid, preferably in such a way that the hydraulic fluid quantity contained in the hydraulic circuit (24) of the utility vehicle (12) remains substantially constant.

## Revendications

1. Dispositif de maintien d'une alimentation hydraulique d'un véhicule utilitaire, comprenant un circuit hydraulique (24) et une pompe hydraulique (28) réglable en ce qui concerne son volume de refoulement par l'intermédiaire d'une entrée de commande de pression (26) pour alimenter le circuit hydraulique (24) en fluide hydraulique, comportant un accumulateur de pression (38) pouvant être chargé par le circuit hydraulique (24) par l'intermédiaire d'un clapet anti-retour (74), une liaison de pression entre le circuit hydraulique (24) et l'entrée de commande de pression (26) de la pompe hydraulique (28) pouvant être établie au moyen d'une vanne de charge (40) par l'intermédiaire d'une conduite de capteur (76), et une liaison d'alimentation entre l'accumulateur de pression (38) et le circuit hydraulique (24) pouvant être établie au moyen d'une vanne de décharge (42) par pontage du clapet anti-retour (74) par l'intermédiaire d'un élément limiteur de pression (80), **caractérisé en ce que** l'élément limiteur de pression (80) est conçu sous forme de vanne de régulation de pression (82) pour fournir une pression de travail prédéfinie dans le circuit hydraulique (24), une entrée de régulation de pression (84) de la vanne de régulation de pression (82) communiquant avec le circuit hydraulique (24) par l'intermédiaire d'une conduite de capteur (86) par pontage de la vanne de décharge (42).

2. Dispositif selon la revendication 1, **caractérisé en ce que** la vanne de décharge (42) passe en position ouverte lors de l'abaissement d'une pression minimale de refoulement prédéfinie de la pompe hydraulique (28).

3. Dispositif selon la revendication 1 ou 2, **caractérisé en ce que** la vanne de charge (40) passe en position ouverte lors de l'abaissement d'une pression minimale d'accumulateur devant être maintenue dans l'accumulateur de pression (38).

4. Dispositif selon au moins l'une des revendications 2 ou 3, **caractérisé en ce qu'**il est prévu un dispositif d'actionnement (44, 46, 88, 92) commandé électriquement et/ou mécaniquement sur la base d'une détection de pression pour ouvrir la vanne de décharge (42) et/ou la vanne de charge (40).

5. Dispositif selon l'une quelconque des revendications précédentes, **caractérisé en ce que** l'accumulateur de pression (38) est un accumulateur à piston (48) pouvant être précontraint au moyen d'un milieu de fonctionnement sous forme de gaz.

6. Dispositif selon la revendication 5, **caractérisé en ce qu'**une unité de contrôle (72) déduit une capacité de stockage d'énergie actuelle de l'accumulateur à piston (48) en fonction d'une pression de précharge détectée par capteur dans un état de stockage prédéfini.

7. Dispositif selon la revendication 5, **caractérisé en ce qu'**une unité de contrôle (72) déduit une capacité de stockage d'énergie actuelle de l'accumulateur à piston (48) en fonction de caractéristiques de charge et/ou de décharge détectées par capteur, qui représentent la courbe de position du piston en fonction de la pression de précharge, de la pression de l'accumulateur ainsi que d'une température de fonctionnement.

8. Dispositif selon la revendication 5, **caractérisé en ce qu'**une unité de contrôle (72) déduit une capacité de stockage d'énergie actuelle de l'accumulateur à piston (48) par comparaison d'une pression de précharge détectée par capteur avec une position de piston détectée par capteur, correspondant à la pression de précharge respective.

9. Dispositif selon au moins l'une des revendications précédentes, **caractérisé en ce que** du fluide hydraulique peut être envoyé au circuit hydraulique (24) par l'intermédiaire d'un autre clapet anti-retour (104), en particulier depuis une alimentation hydraulique supplémentaire (110) raccordable par l'intermédiaire d'un accouplement hydraulique amovible (108a, 108b), un distributeur (112) pouvant établir simultanément, en fonction d'une alimentation en fluide hydraulique détectée, un raccordement entre un retour (114) du circuit hydraulique (24) et un réservoir de l'alimentation hydraulique supplémentaire (110), de préférence de telle sorte que la quantité de fluide hydraulique contenue dans le circuit hydraulique (24) du véhicule utilitaire (12) reste sensiblement inchangée.
